# EUROPEAN PATENT SPECIFICATION

(11) **EP 4 082 756 B1**
(45) Date of publication and mention of the grant of the patent: **22.11.2023**
(21) Application number: 21171243.5
(22) Date of filing: 29.04.2021
(51) Int. Cl.: B29C 64/295, B29C 64/118, B29C 64/209, B29C 48/02, B29C 48/05, B29C 48/25, B29C 48/80, B29C 48/86, B33Y 10/00, B33Y 30/00

(54) **EXTRUSION FOR 3D PRINTING**
EXTRUSION FÜR DEN 3D-DRUCK
EXTRUSION POUR IMPRESSION 3D

(43) Date of publication of application: 02.11.2022
(73) Proprietor: ValCUN BV, 9041 Oostakker (BE)
(72) Inventor: GALLE, Jonas, Oostakker (BE); DE PAUW, Jan, Zomergem (BE)
(74) Representative: Winger

(56) References cited:
- EP-A1- 3 459 710
- US-A1- 2016 354 977
- US-A1- 2018 345 572
- US-A1- 2018 345 573

## Description

### Field of the invention

The invention relates to the field of 3D printing. More specifically it relates to extrusion methods and extruders for continuous extrusion.

### Background of the invention

3D printing and other additive manufacturing techniques allow a great deal of freedom of design and prototyping. The leap from the design process and the manufacture can be reduced, because a product can be produced and tested, right after the design, at lower cost than if an entire industrial manufacturing process has to be set up for just the testing phase.

Well established techniques include wire-based 3D printing, such as fused filament fabrication (FFF). These techniques include providing, usually by extrusion, a continuous wire which is deposited and attached to a plate or to other already deposited wires, forming a 3D object. The materials are typically polymers and metals or a mixture thereof, and the attachment can be done with polymers or ceramic acting as adhesive, sometimes followed by sintering or curing, or by thermal fusion between the wires.

However, extrusion usually requires heating the material so it can fuse upon deposition. Extrusion of polymer is slow due to their viscosity, thermal conductivity, etc. The range of temperatures available to compensate for these effects is limited due to chemical decomposition. On the other hand, extrusion of metal requires melting it, and liquid metal is difficult to extrude in a controlled way. Viscosity of molten metal is comparable to water, so introducing fed material on a liquid pool as done in FFF displaces a volume of liquid against the direction of the fed material, with clogging as a result. Molten metal dripping and oozing from the extruder becomes also an issue due to the material properties, it cannot be tackled in the same way as done for polymers (e.g. by retracting fed material or reducing feeding speed). To avoid these problems, providing a metal wire can be done by mixture of powder metal with binder such as resin and extruding this mixture. However the technique requires an aftertreatment to remove the binder and ensure the integrity and adhesion of the layers of deposited material, which creates a further step in the process and brings issues such as stresses, shrinkage or even cracking, limiting the design complexity and flexibility.

Aside of controlling melting temperatures, it is necessary to control and possibly avoid chemical reactions such as oxidation and intermetallic bindings with the surrounding in the case of metals. Thermal conduction becomes also an issue with metals, so it is difficult to control melting as heat spreads over fed material, sometimes becoming hot even outside of the extruder, which may disturb the process as buckling can easily occur or even be dangerous.

Extrusion force is highly influenced by flow rate, which is very sensitive to friction, oxidation, etc. Reliable and consistent extrusion is difficult to obtain, even by pressure-driven extrusion. Document US2018345573A1 discloses an additive manufacturing system requiring a source of pressurized gas to overcome the resistance of the extrusion tube to the passage of metal to be extruded. Document US2016354977A1 discloses a further additive manufacturing system, providing for the features of the preamble of claim 1.

It would be desirable to obtain reliable extrusion, avoiding oozing, with controllable extrusion rate and high range of extrusion rates regardless of the type of material.

### Summary of the invention

It is an object of embodiments of the present invention to provide a device and method for 3D printing by Fused Filament Fabrication (FFF) where reliable extrusion can be provided of metals or of polymers at controllable speeds, including high speeds, in a simple feeding system setup with no need of further pressure systems.

In a first aspect, the present invention provides an extruder for 3D printing, comprising an outlet for providing extruded material, and a feedstock inlet piece for receiving material into the extruder.

The feedstock inlet piece is an extruder part or piece including cooling means for cooling said material entering the extruder. The feedstock inlet piece includes the inlet to allow entry of material to the extruder.

A reservoir is included for melting material and for keeping molten material, having a reservoir width. The reservoir is connected to the outlet.

A channel with a channel width is arranged for connecting the feedstock inlet piece with the reservoir and for introducing the material into the reservoir. The channel width is lower than the reservoir width.

The extruder further comprises at least one heater for melting material in the reservoir, and a controller for controlling the temperature gradient of the material through the channel. The controller is configured to maintain the level of molten material at least at the junction between the reservoir and the channel or along the channel during extrusion, for providing extrusion by the material introduced through the feedstock inlet piece and pushing on the molten material in the reservoir. In particular, a mushy region of material being in transition between the liquid state and solid state is present in the channel, closer to the reservoir than to the feedstock inlet piece. This is controlled by the temperature gradient, which in turn is controlled by controlling heating/cooling and/or feeding parameters with a controller, e.g. connected to a CPU. The mushy region and the feedstock material acts as a plunger.

It is an advantage of embodiments of the present invention that an extruder can be provided with controllable extrusion speed which depends on the feedrate, as a mushy zone present in the channel out of the reservoir, or the molten material filling the reservoir, seals the reservoir. The sealing also reduces the amount of liquid going upwards. The presence of the wider reservoir reduces the friction between the wire and the walls of the extruder, so the feeding force can be reduced, thus reducing the chances of bending or buckling in case of wire feeding. It is a further advantage that oozing and dripping, even in metal extrusion, can be reduced or removed thanks to the sealing.

In some embodiments of the present invention, the controller is configured to control the heater. In some embodiments, further, the cooling means including an active cooler allowing control of the cooling rate. The controller is configured to control the active cooler for controlling the cooling rate of the material upon entry in the extruder.

It is an advantage of embodiments of the present invention that stable and controllable extrusion can be obtained by improving control of the temperature gradient, thus improving the localization of the formation of the mushy zone with less need or no need of reducing the temperature of the material in the reservoir. In wire feeding, chances of bending are further reduced thanks to the presence of a reservoir which is wider than the channel, and thanks to the temperature gradient control which limits the portion where wire becomes weak due to the high temperature. The position of the mushy region is preferably fixed. As the reservoir has high thermal mass and reacts slowly to changes, the position of the mushy region can be calibrated by finding the temperature at which no dripping is noticed. However, from experiments it is found that the optimum heating sometimes depends (slightly) on the federate. To optimize performance, the setpoint temperature might be changed as function of feedrate.

Alternatively or additionally, the extruder further comprises a material feeder for feeding material into the feedstock inlet piece which can be controlled by the controller, and the controller is further configured to control the material feeder to control the feedrate.

It is an advantage of embodiments of the present invention that stable and controllable extrusion can be obtained at different feedrates. It is a further advantage that, for passive cooling and/or a fixed heating rate, the temperature gradient and the position of the mushy region or zone can be controlled.

In particular embodiments, the material feeder is a wire feeder for feeding wire. The extruder further comprises a load cell between the wire feeder and feedstock inlet piece to measure the extrusion force on the wire.

It is an advantage that bending or wire slipping can be noticed early and prevented.

The heater includes a first heater for melting material in a first reservoir part of the reservoir close to the channel. The heater further comprises a second heater close to the connection of the reservoir to the outlet, for maintaining molten material in a second reservoir part of the reservoir close to the outlet at the same temperature as the material in the first reservoir part or at higher temperature.

It is an advantage of embodiments of the present invention that stable and controllable extrusion can be obtained for different materials, where the first reservoir can be used to provide a piston sealing and the second reservoir can be used to provide high control of the extrusion temperature.

In particular, the first heater is distanced from the second heater by a thermal break separating the reservoir in a first reservoir part close to the channel and a second reservoir part close to the outlet. It is an advantage that the temperature in both parts can be accurately controlled independently, as there is less heat loss from one part to the other, specially when keeping them at different temperatures. In particular embodiments, the thermal break provides a further channel being adapted to thermally insulate the first part from the second part of the reservoir. It is an advantage of embodiments of the present invention that high temperature control of extruded material is provided and guaranteed.

In embodiments of the present invention, the outlet comprises a further heater for controlling the temperature of the extruded material at the outlet.

It is an advantage of embodiments of the present invention that heat loss, for example heat extraction by an extruder nozzle at the outlet, can be compensated. It is a further advantage that process control can be improved as the heating response is fast, as the thermal mass of the extruded material is small.

In embodiments of the present invention, an insulating piece including at least a portion of the channel is included, to thermally insulate the feedstock inlet piece from the reservoir. It is an advantage of embodiments that it allows a mushy zone to be formed along the channel but close to the reservoir to avoid clogging, outside the reservoir and between the heater and cooling means. It is a further advantage that a more controllable temperature and steep gradient can be provided between the cooling means of the feedstock inlet piece and the heaters, maximizing the efficiency (because to create a steep temp gradient it is required to intensively cool one side and heat the other side.

In embodiments of the present invention, electrodes are present and configured to apply a voltage between the extruder and a buildplate of a 3D printer. It is an advantage of embodiments that the adhesion can be improved by locally heating the buildplate.

In some embodiments of the present invention, the outlet comprises an extrusion nozzle, optionally a replaceable nozzle.

In a second aspect of the present invention, a method is provided for extruding material. The method comprises
- introducing material in said extruder through a feedstock inlet piece,
- heating material in a reservoir for obtaining a level of molten material, while preventing the heating of the material through the feedstock inlet piece,
- feeding material into the reservoir through a channel, the channel having a channel width and the reservoir having a reservoir width, where the channel width is lower than the reservoir width,
- controlling the temperature gradient along the channel for maintaining the level of molten material at the junction between the reservoir and the channel or along the channel during extrusion,
so that introducing further solid material into the reservoir pushes the molten material in the reservoir through an outlet connected to the reservoir, thus forming extruded material.

It is an advantage of embodiments of the present invention that extrusion speed can be controlled, by controlling feedrate, because the mushy region or zone present in the channel, out of the reservoir, seals the extruder thus allowing higher feedrates without liquid going upwards. It is a further advantage that oozing and dripping in metal extrusion can be reduced or removed thanks to the sealing, even for molten materials with low viscosity. It is a further advantage that the reduced friction along the extruder reduces bending or buckling in case of wire feeding, because the friction occurs mostly along the channel and it is relieved by the reservoir being wider than the channel.

In some embodiments of the present invention, the method comprises controlling the feedrate of material. Additionally or alternatively, cooling the material comprises controlling the cooling rate. It is an advantage of embodiments of the present invention that stable and controllable extrusion can be obtained by improving control of the temperature gradient, thus improving the localization of the formation of the mushy zone with no need of reducing the temperature of the material in the reservoir. In wire feeding, chances of bending are further reduced as the presence of the reservoir reduces wire friction with the extruder. It is a further advantage that stable and controllable extrusion can be obtained for different feedrates.

In some embodiments, the method is a method for extruding aluminum, an aluminum alloy or copper.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates a simple example not part of the claimed invention with a controlled heater for melting material in the reservoir.
FIG 2 illustrates an embodiment with two heaters for heating material in the reservoir, and an active cooler at the inlet, for reducing heat conduction to the material close to the inlet.
FIG 3 illustrates an embodiment including two heaters and a necking or channel separating zones in the reservoir which are heated by different heaters.
FIG 4 illustrates an embodiment further including a feedstock mechanism.
FIG 5 illustrates an embodiment with a feeder mechanism including a feeding screw.
FIG 6 illustrates an embodiment with a block of material which forms the area of the extruder comprising the reservoir, instead of different joined pieces. In this particular example, it is shown also the option where the heaters are embedded in the material.
FIG 7 illustrates an embodiment with an alternative configuration of heaters.
FIG 8 is a chart with method steps in accordance with the present invention.
FIG 9 illustrates the mushy region where the material undergoes a phase transition in the channel before the reservoir, at a so-called low feedrate.
FIG 10 illustrates the transition to molten state in the reservoir, the gap between the fed material and the walls of the channel being filled with mushy material, in the so-called high feedrate.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures, and techniques have not been shown in detail in order not to obscure an understanding of this description.

Where in embodiments of the present invention reference is made to "mushy zone", reference is made to the region of a solid where melting takes place, between its liquid phase and its solid phase. With 'solid' it is understood a material in its solid phase, which may be in the form of powder, pellets, wire, etc. at a condition (temperature) falling within the solid region of its phase diagram. Suitable materials for extrusion include metals, alloys, polymer, etc. Polymeric materials also require heating to soften them to a viscous state easily extrudable state, which can be considered a molten state and which starts at the glass transition temperature in case of polymers, and the transition region between these unmolten and molten states may also be called 'mushy zone' for simplicity.

The present invention relates to 3D printing methods like Fused Filament Fabrication (FFF), in particular to wire-based 3D printing in which a continuously extruded wire is formed and deposited. Extrusion volume and adhesion of the wire to the underlying material are critical parameters. For good adhesion, one of the requirements is having sufficient temperature of the wire .

Softening and melting of the material for extrusion require high temperatures (e.g. temperatures above melting temperature of the material) but molten material is difficult to handle, both polymers and metals typically used in 3D printing mainly due to the low viscosity and high thermal conductivity. Softened (molten) material is forced through an outlet shaped so a wire can be formed, usually a nozzle. This force has to be provided while at the same time keeping the material molten.

Pressure driven extrusion systems are dependent on forces such as friction, wear, oxidation.... These forces are unstable and can easily vary. Using a high-pressure system may allow higher friction and better control, but in some cases it increases the complexity of the system.

To solve this issue, volumetric extrusion was introduced, where ideally the volume of material introduced in the extruder is the same as the volume of extruded material, and it is independent of the required force. Volumetric extrusion can be achieved by the pushing/displacement of feeding material, e.g. a fed wire or extrusion screw for granulates, very similar to polymer printing (FFF technology). However when unmolten material is introduced in the extruder and enters the region with molten material, a volume of the molten material is displaced towards the space which presents the least resistance. This usually causes an upflow of molten material towards the inlet through which unmolten material is introduced (especially in the case of liquid metal), causing accidents, disturbing the feeding and preventing a continuous extrusion.

Additionally, polymers and metals present different extrusion issues.

The low conductivity of polymers reduces heat transfer from the heater to the polymer, compared to the case of metals. The maximum usable temperature of polymers is limited to prevent decomposition.

Molten polymers are highly viscous. This requires high extrusion forces and give high friction during extrusion, so the speed at which molten polymer is extruded depends on the viscosity, and together with the low thermal conductivity it limits the extrusion speeds. Metals, on the other hand, show high thermal conduction and latent heat, so they require high temperature to melt and present issues such as feeder clogging and dripping/oozing from the extruder when extrusion is paused between different deposition stages.

The present invention provides an extruder and a method of extrusion of materials which enter the device in a solid state and exit in a molten state, for different materials with a wide range of viscosity including polymers (>100mPa.s) and metals (<100mPa.s), and for a wide range of deposition speeds.

In some embodiments the present invention allows, for a standard nozzle hole (up to ^{~}1mm), a deposition rate close to 1l/h or even larger. A higher nozzle diameter (e.g. 5 mm) allows higher deposition rates up to 15l/h, depending on layer thicknesses and heating power.

The invention provides a volume, or 'reservoir', in the extruder which is filled with molten material. A channel is used to feed material to this reservoir, and an outlet, connected to the reservoir, provides extruded material. The extruder is configured so that material does not flow upwards the channel. For this, the extruder is designed so the material being fed does not heat up to the melting temperatures at the inlet of the extruder, while the material in the reservoir is heated up so molten material fills the reservoir. The reservoir is wider than the channel, so upflow is limited by increasing resistance due to the bottleneck between the reservoir and channel.

Thanks to this configuration, material entering the reservoir through the channel behaves as a 'consumable piston', which seals the reservoir and exerts pressure on ('pushes') the molten material into the reservoir and the outlet of the extruder, while the material is melting. Hence, extrusion rate can be controlled by the feeding of the material, for example by changing the rate at which material is fed or feedrate. The amount of material flowing upwards is reduced or removed, not only by the configuration of the channel and reservoir, but also by controlling the temperature gradient, ensuring that the position of the mushy zone is close to the reservoir. However, the accurate position at which material is 'mushy' is a result of the design, based on the used materials, power consumption, characteristics of the extruded material, feedrate and operating temperatures, for example.

In other words, a temperature gradient through the fed material passing through the channel before the reservoir is required so there is molten material at least in the reservoir, optionally in the reservoir and part of the channel so there is a mushy zone along the channel. The mushy zone may be short enough so there is no clogging of the channel, and together with the width difference between reservoir and channel, helps reducing upflow. In case of wire-fed material, the gradient allows keeping short the weakening zone, and, together with the reduced friction provided by the reservoir, reduces chances of bucking. The temperature of the material is lowered upstream from the reservoir, so the material remains solid when close to the inlet. The material should preferably not reach weakening due to high temperature close to the inlet. For example, in case of aluminum, weakening starts at around 250°C and buckling may occur at even lower temperatures, so typically the temperature upstream at the inlet should not exceed 100°C, preferably even lower, e.g. 50°C. When feeding material at high feedrate, any upflowing molten material solidifies at least partially thanks to the reservoir/channel diameter configuration and the temperature gradient. This behavior allows the formation of the mushy zones at high feedrates, sealing the channel and providing the 'piston' effect. In order to reduce or avoid clogging or jamming, the temperature gradient and/or feedrate acceleration can be tuned, so the upflow of material is kept in a limited zone whose limit is closer to the reservoir than to the inlet. The temperature gradient can be improved by adding, close to the inlet, a controllable cooling system, or 'active cooling', although the present invention is not limited thereto and passive cooling systems, such as heat sinks or the like can be placed close to the inlet of the extruder, at the so-called feedstock inlet piece. For example, the limit of the mushy zone (e.g. the limit of the upflow in high feedrates) is preferably closer to the reservoir than to the cooled feedstock inlet piece. There may be thermal insulation along the channel between the region close to the top of the inlet channel and the heating region at the reservoir. The type of cooling can be adapted in accordance with the material being extruded.

Additionally, molten metal behaves as liquid which may ooze from the extruder even when no material is being fed to the extruder. In the present invention, oozing and dripping are prevented thanks to the action of the consumable piston sealing the channel and the inlet with no need of valves or pressure systems, as ambient gas (air or inert gas, such as argon or the like to e.g. prevent oxidation of the molten metal) cannot enter the extruder to replace the liquid in the reservoir and causing these issues. Other factors that enhance the behavior of preventing lower density fluid to enter in the extruder include the high surface tension of the molten material, the small nozzle diameter, low diffusivity of outer fluid (in other words, low tendency of e.g. ambient/surrounding gas to diffuse into molten material) in the molten material with higher viscosity. Moreover, the pressure difference through the outlet, e.g. across the nozzle, helps preventing dripping.

Thanks to this behaviour, when the print head is moved away from the substrate or printed part as a liquid (metal) is being extruded, the material (e.g. aluminium) at the tip can advantageously break or shear off. Other elements can be included for enhancing this behaviour, e.g. by promoting rapid cooling (e.g. by turning on/off an optional fast responding nozzle tip heater or cooling jet of gas, mist or fluid evaporation). This will cool down the material within the solidification range or even near or slightly under solidus temperature so the print head can easily rip off the solid connection between the nozzle and substrate without damaging the nozzle, printhead or printed part.

In a first aspect, the present invention relates to an extrusion device, or extruding piece, or extruder for short. The extruder includes a feedstock inlet piece and an outlet, connected via a channel and a reservoir. The extruder has at least one heater to melt material in the reservoir. A controller, for example a processor, even a closed loop control system implemented in an electronic circuit, provides control of the process so the reservoir is full of molten material, and a mushy zone is kept along the channel between the inlet and the reservoir, and closer to the reservoir than to the inlet, e.g. to the feedstock inlet piece. The controller may control the temperature gradient of the material, e.g. by controlling the power of the heaters and/or coolers, or keeping these fixed and controlling the feedrate. Thus, the gradient control may be done by control of heating rate, cooling rate, feedrate or a combination of these parameters.

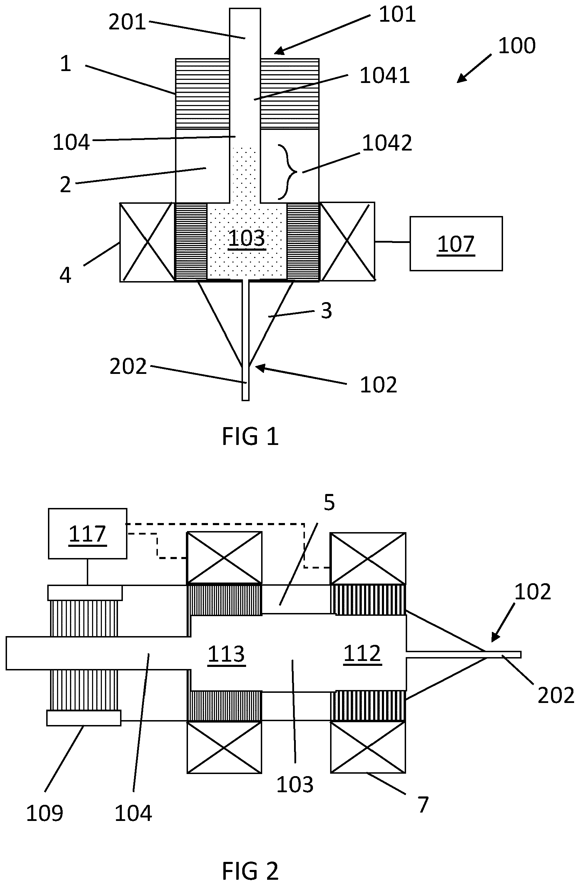

FIG 1 shows an example not part of the claimed invention, where an extruder 100 includes a feedstock inlet piece 1 being a piece which includes the inlet 101 through which material can be introduced into the extruder. The feedstock inlet piece 1 includes a cooling system, which also benefits the cooling of material, even metal wires, further preventing weakening of the material at the inlet. The cooling system shown in FIG 1 is a passive cooling system, for example a heat sink comprising suitable material for dissipating heat, optionally including heat dissipating structures such as fins or the like. A channel 104 extends between the inlet 101 and a reservoir 103 of molten material. The channel is narrower than the reservoir. It should be dimensioned such that for the particular material (and for different design feedrates), a liquid film exists between the solid fed material (e.g. wire) and the wall of the reservoir. This is a result of the heat transfer from the heaters to the solid wire. Furthermore, in the case of wires, the resulting friction between that liquid and the fed wire should be such that the required force is not higher than the buckling force of the wire. The diameter of the channel can be chosen depending on the feedstock material, e.g. for a wire of 1.2 mm, 1.3 mm at the connection with the reservoir, while the reservoir may have a width or diameter of few mm but larger than the diameter of the channel at the connection with it, e.g. about ten, for example 8 mm. The length of the reservoir may be provided in accordance with the maximum feedrates to be achieved for a given heating power taking into account heat transfer, etc.

The channel 104 traverses an insulating piece 2, for example a piece comprising or made of thermally insulating material (e.g. insulating ceramic), so the heat in the reservoir 103 does not weaken the material at the level of the inlet 101 and the heat extracted by zone 1 is limited, to improve energy efficiency.

It is noted that the diameter of the channel 104 may not be constant, and it may be adapted to optimize e.g. insulation, reduce buckling or friction, facilitate material entrance, etc. For example, the diameter of the channel 104 through the feedstock inlet piece 1 may be different, e.g. larger than through the insulating piece 2, for example it may be 2 mm and 1.3 mm respectively.

The reservoir 103 is connected to an outlet 102 which provides extruded material 202 (e.g. wire for deposition, e.g. a hot wire). The outlet 102 may be configured to provide extrusion forces, e.g. a nozzle 3. One heater 4 is provided at the region of the reservoir, to melt material entering the reservoir. The heater 4 may include any known suitable system such as induction or resistance heating, liquid/gas heating, etc. Heaters can be at the external part of the extruder, or integrated in the chamber material, or even in contact with the molten material.

The present invention allows high feedrates, with accelerations of up to 100 mm/s², with no buckling.

The extruder is configured to prevent flow of molten material towards the inlet. In particular, the channel 104 is narrower than the reservoir 103 and a temperature gradient is also provided along the channel, so a volume of mushy material forms along the channel, which deforms easily and takes the shape of the channel, sealing it. Hence, the material being introduced into the reservoir acts as a plunger, pushing the molten material towards the extruder. In order to provide a gradient such that there is mushy material along the channel, and blocking the inlet from air or gas entering or liquid flowing up, the heater 4 and the cooling system of the feedstock inlet piece 1 are configured to keep the respective high and lower temperatures at opposite extremes of the channel 104, for example at or close to the reservoir 103 and around the bottom of the cooling system respectively. The feedrate can be considered when providing the heating and/or cooling for controlling the gradient.
- When heat conductivity of the material is very high and/or the feedrate is low, the heat may travel towards the inlet and cause clogging, weakening, and starting melting in the channel portion 1041, including the portion of the channel at the feedstock inlet piece 1 and close to it, e.g. up to half the length of the channel between the bottom of the feedstock inlet piece and the reservoir, e.g. the top half of the insulating piece 2. This is avoided by controlling the gradient so the mushy zone and melting along happen close to the reservoir 103, for example in a portion 1042 of the channel crossing the insulating piece 2, a length e.g. from half of the insulating piece to the reservoir.
- When the feedrate is high enough to prevent the heat from moving upwards, partially or fully solid material enters the reservoir and melts there. This pushes upwards molten material, so the temperature gradient should be such that this material starts cooling and forming a mushy zone close to the reservoir, sealing the channel as before.

In general, it is preferred that the mushy zone is relatively small and closer to the reservoir than to the colder area close to the inlet. If the mushy zone is too high in the channel, close to the (cooled) feedstock inlet piece, the mushy material solidifies, causing clogging. It also requires higher extrusion force, increasing the probability of buckling. On the other hand, the heating and cooling may be such that the gradient is relatively high, but only at the wire to advantageously limit the power consumption. The insulating piece 2 prevents drawing too much heat by the cooling system from the reservoir. A small temperature gradient makes the positioning and length of the mushy zone more sensitive to variable feedrates, and its limit tends to extend closer to the feedstock inlet piece 1. A high length of the channel before the reservoir further reduces the temperature gradient, increasing the length of the mushy zone. A high length of this zone increases the friction forces, increasing the chance of buckling and clogging.

Due to the differences of properties in materials, the feedrates, temperatures and dimensions can be optimized for each material. In the case of aluminum extrusion, for a 1.2 mm wire, these values can be used as exemplary parameters:
Length of inlet channel 104, e.g. the portion of the insulating piece 2: 5 mm-12 mm.
Inlet channel diameter 104 (insulating piece 2): 1.3 mm-1.5 mm
Temperature gradients: up to 100°C/mm
Length of mushy zone: 1 mm-4 mm
Length between bottom mushy zone and reservoir: 0-4 mm
Length of cooled feedstock inlet piece 1: 5 mm to 100 mm

The gradient is controlled by a controller 107, so that there is a mushy region blocking upwards flow of molten material from the reservoir to the bottom of the feedstock inlet piece 1. In the particular example of FIG 1, the control unit or controller 107 controls the amount of heat provided by the heater 4. Depending on factors such as the feedrate, the gap between the material being fed and the walls of the channel, the material viscosity and thermal conductance, the cooling rate of the cooling system at the feedstock inlet piece 1, the length of the channel 104 and/or the melting temperature of the material, the controller 107 may provide larger or lower heating, heating close to or surpassing the melting temperature of the material so that the channel is sealed with partially molten material (or mushy zone) to prevent upflow, so the material being fed through the channel behaves as a 'plunger'.

In some embodiments as shown in FIG 1, depending on the extruded material and/or extrusion speed range, only one reservoir, heating element and/or temperature setting is required in order to provide extrusion and the required gradient. However, providing active cooling and multiple heaters and/or temperature setpoints (FIG 2) may increase flexibility, for example different extrusion speeds can be provided.

FIG 2 shows an embodiment of the present invention where active cooling is provided at the feedstock inlet piece 1. Active cooling may be provided by any form of controllable liquid or gas (e.g. forced air), thermo-electric or heat pipes. For example, the feedstock inlet piece 1 may include an active cooler 109, which may include a circuit of pipes for cooling fluid (gas, liquid such as water, etc.). This active cooling system can be controlled, increasing or decreasing the cooling rate according to the particular application. This is advantageous for, for example:
- compensation for thermal conductivity of fed material (e.g. metal wire) at different feedrates, thus reducing the large weakening zone,
- providing gradient of temperatures for generating a mushy zone in a predetermined zone of the extruder, preferably closer to the reservoir than to the inlet,
- control of the temperature gradient of the fed material through the channel, for different feedrates.

Active cooling can be combined with a single heater, but some embodiments of the present invention include a plurality of heaters, as shown in FIG 2, as the temperature of the control of the mushy zone can be different than the required extrusion temperature. This is just a particular example, and a plurality of heaters can also be applied to extruders with passive cooling at the feedstock inlet piece, such as the one shown in FIG 1. Having several heaters allows material within the reservoir to be heated at different zones, for example one zone closer to the channel than to the outlet, and another non-overlapping zone closer to the outlet than to the channel.

The heaters may heat the material at the same temperature. This can be done for polymers, allowing control of the temperature at the mushy zone and close to the outlet, e.g. at the extrusion zone. Heat extraction in the two zones might be different, so even though the same temperature setpoint is required, it is advantageous to use two different heaters that control (independently) the temperature of the two zones. This is advantageous over current FFF designs, for example. In alternative embodiments, the heater or heaters closer to the channel 104 may heat the material at a lower temperature than the heater or heaters further away from the channel. This is advantageous in materials with large thermal conductivity (as in metals), because it allows decoupling the heater of the first reservoir part 113 from the rest of the heaters, e.g. decoupling the heater for heating to provide a temperature gradient from the heater for heating to provide good and continuous extrusion. In other words, the temperature needed to provide the piston effect of the fed material can be controlled by the first heater, while the optimal temperature for extrusion, much higher than the temperature of solid-liquid transition, can be provided by the second heater which heats material at optimal extrusion temperature (e.g. closer to the outlet than to the channel). In some not limiting examples, in case of metals it may be 100°C to 500°C hotter in the second reservoir, while for polymers due to their low conductivity may not be any difference, up to around 50°C hotter. This results in two zones within the reservoir 103, a first reservoir part 113 where the material is heated by the first heater 4, and a second reservoir part 112 where the material is heated by the second heater 7. The presence of a first reservoir part 113 dedicated to the generation of the temperature gradient and a second reservoir part 112 dedicated to the generation of optimal extrusion heat allows better control of the extrusion process at different heating rates.

The heaters 4, 7 may be the same or different type, for example they may be optimized for the intended range of temperatures. If the design, process and extrusion material allow it, it can even be the same heater as shown in FIG 1 or one with predefined power distribution.

In some embodiments, the temperature gradient in the fed material, for example the gradient at the channel, can be provided by controlling the cooling rate by a controller 117, by controlling the heating rate of the heater 4 closest to the channel, or by controlling both the cooling rate of the active cooler 109 and the heating rate of the heater 4 closest to the channel. Further, the controller 117 can provide control of the second heater.

In some embodiments, the first and second heaters are thermally insulated from each other at least by a thermal break 5, so their heating rate can be set or controlled accurately. This thermal break 5 may be similar as the insulating piece 2, albeit optimized to insulate heat fluxes at a temperature within the range of temperatures of the reservoir.

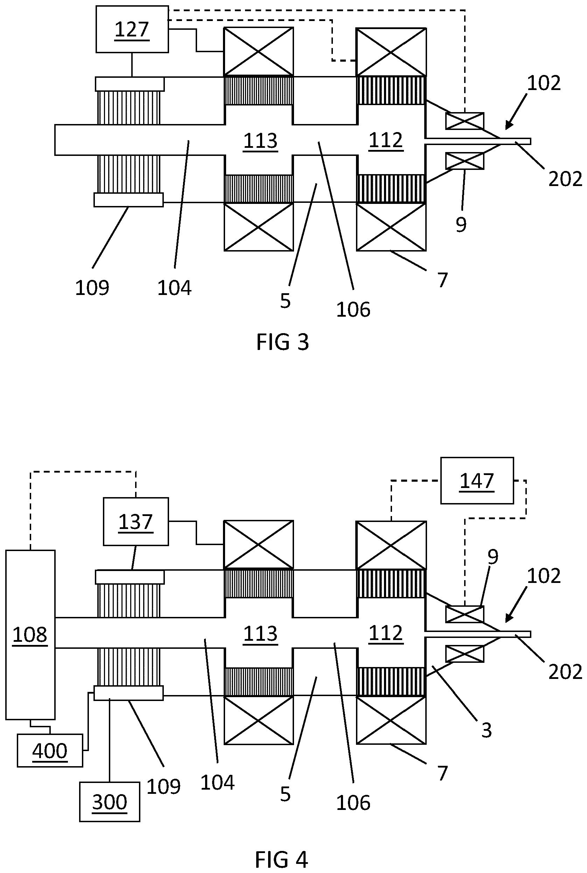

FIG 3 shows an embodiment of the present invention where the first reservoir part 113 and the second reservoir part 112 are linked by a thermal break 5 which provides a second channel 106, or necking, with a smaller diameter than the rest of the reservoir 103. This diameter can be bigger, equal or smaller than the feeding channel diameter. The smaller the diameter the better the insulation, as less heat can travel through the liquid, however friction should be taken into account and a balance should be found in accordance with the material, viscosity, etc. The presence of a channel 106 is relevant for materials with high thermal conductivity and low viscosity, such as liquid metals. Hence for polymers, due to the low conductivity and high viscosity, the diameter might preferable be larger, e.g. as large as the rest of the reservoir (in practice, removing the necking as shown in FIG 2).

In embodiments of the present invention, a further heater 9 may be added to the outlet. For example, an extrusion nozzle at the output may comprise a nozzle tip heater 9, to compensate for heat extraction by the workpiece/printed part and ambient. As the heater is in contact with a small thermal mass part of the liquified material, the heating response is high and allows optimal process control. For example, turning off the heater may allow fast cooling of the tip and solidification, improving process control and reducing dripping and the like.

The further heater 9 can be controlled by the same controller that controls the temperature gradient (the controller 127 that controls e.g. the heater, or an active cooling system, or both).

However, such nozzle heater 9 might not be required for some materials, e.g. for materials with low melting temperatures, and/or low thermal conductivity.

FIG 4 shows an embodiment comprising two reservoir parts and a further channel 106 as in FIG 3. FIG 4 also shows that the present invention may include a controller 137 configured for providing the temperature gradient (e.g. by at least controlling an active cooler 109, or a heater 4 for the first reservoir part 113, or both), and a second controller 147 dedicated to control the extrusion temperatures, e.g. the heater of the second reservoir part 112 and the further heater 9, e.g. tip heater.

In some embodiments of the present invention, a feeder mechanism 108, for example a feedstock and/or a driving system, can be included to provide a volumetric displacement of the fed material and providing enough pressure to do the extrusion in fully liquid state. These systems depend on the type of material being used. For example, in case of wire, feedstock and driving system may include feeding wheels. In case that granulates or pellets are used as feeding material, the feedstock may comprise a hopper and the driving system for example an extrusion screw.

This feeder mechanism 108 can be positioned at a predetermined distance from the extruder, for example on the frame of the printer, in a configuration known as Bowden feeding principle. Or the feeder mechanism can directly be installed on top and aligned with the extruder, becoming a part of the printhead. However, it is distant enough not to be affected by the high temperatures managed in the extruder, e.g. it may be placed in an area at temperatures of 50°C or lower, so it may be cold compared to the extruder, so moving parts, seals and other parts of the mechanism has low risk of thermal damage.

The feeder mechanism can be controlled, for example for providing different feedrates, which result in different extruding rates in embodiments of the present invention. The controller 137 used to control the temperature gradient can also or alternatively be used to control feedrate, pressure, etc. by setting appropriate algorithms and connections between the feeder mechanisms 108 and the controller 137, e.g. including a central processing unit. Thus, the feedrate can be considered and be controlled for the precise control of the temperature gradient along the channel. For example, in the case the feeding material is a wire with very high conductivity, to ensure that the mushy zone is in an optimal position along the channel, the heating power and temperature gradient can be appropriately chosen so the weakening of the wire does not cause bending or the like. In preferred embodiments, the feedrate is predetermined, and the temperature gradient is controlled and set accordingly. However, the present invention is not limited thereto, and the feedrate may also be tuned. As the conductivity spread relatively fast along the wire, the rate can be higher than for the case of polymer wires. For this, the controller can take into account the cooling rate (which could also be controlled, in case of active cooling 109 being present) and/or the heating rate of the heaters in the reservoir, for example in the first or top part of the reservoir.

It is noted that the feeder mechanism 108 may be included as part of the extruder of the present invention, for example but not exclusively on the embodiments shown in FIG 2 to FIG 3. Any controller can be used to control the feeder mechanism 108, such as for example the controller 107, 117, 127, 137 which controls the temperature gradient, or even the controller 147 which controls the heaters dedicated to heat at extrusion temperatures.

In some embodiments, the heaters may provide a predetermined power distribution and the cooler may also have fixed or passive cooling, so the temperature gradient of the material in the channel can be controlled by controlling the time from the entry in the extruder until it melts close or in the reservoir, e.g. by controlling the feedrate.

In general, although each heater, feedback mechanisms and optionally active cooler may be controlled with a dedicated controller, all controllers can be connected to a central processing unit, for example in a computer, which controls all the processes.

In some embodiments (for example but not limited to the one in FIG 4), a load cell 400 can be provided to measure extrusion force on the wire, for embodiments using wire as feeding material. For example the load cell is connected to the feeder mechanism 108 and also to the printhead to measure extrusion force. This gives information of the reaction force of the wire pushing on the mushy zone. If the feeder pushes the wire, due to the reaction force of the wire on the mushy zone, the feeder and printhead tend to move apart, which is detected by the load cell 400. The load cell may be connected to the controller/CPU, as a sensor input, for feedback. For example, the controller may adjust the temperature gradient, or the feedrate if connected to the mechanism, if the sensor detects an unwanted change on the force applied to the wire, which is useful to e.g. reduce bending, buckling and jamming. Additionally, an encoder wheel can be implemented to measure slip of the feeding mechanism. When wire slip is detected, most likely the wire has jammed and the feeding process needs to be stopped.

In embodiments of the present invention, pressure-driven extrusion is not required, so no complex pressure systems are necessary. However, a system 300 for applying overpressure on the extruder, for example on the reservoir, may be used. The overpressure system 300 may be configured to apply a small overpressure of for example lower than 100 mbar of inert gas (in case of aluminium), enough to evacuate oxygen and other reactive gases from the extruder or to prevent those gasses to enter. This system is not configured to apply a pressure high enough to drive the extrusion, but it may be enough to protect reactive molten material (e.g. molten metal) and reduce unwanted reactions such as oxidation.

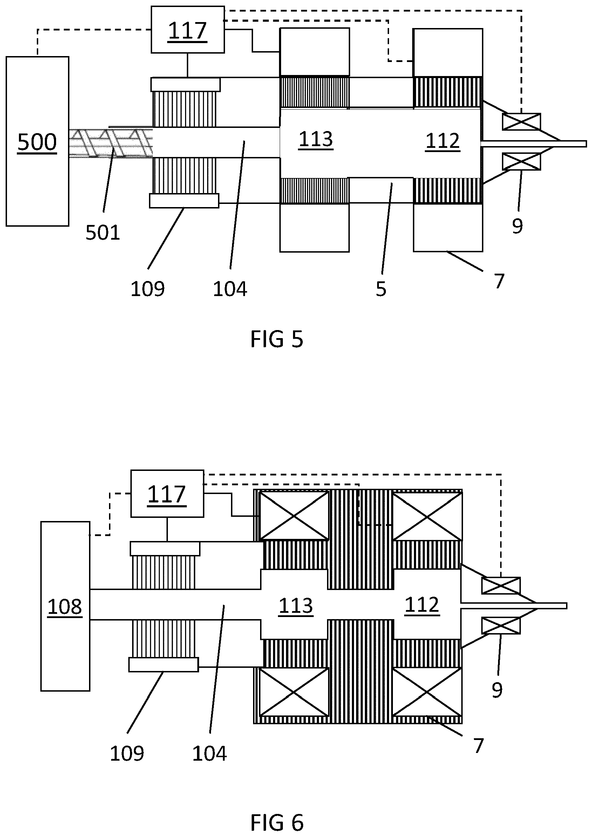

Feeder mechanisms may not be limited to wire feeding. Any suitable feeding system can be used. In some embodiments, as shown in FIG 5, the feeder mechanism 500 may comprise a screw 501 that is mounted entirely in the cold zone, which allows using many different materials as screw which do not need to withstand high temperatures. However, this is not limiting, and the screw can extend inside the extruder and the channel towards the reservoir. The extrusion screw 501 is configured for driving material in the form of granulates or powder. It allows both volumetric displacement and optionally (at least partial) melting of the pellets due to shear and friction, which is advantageous in the melting of polymers. Additional heat is applied by heaters 4. In some embodiments of the present invention, for example related to FFF polymer printing, the driving mechanism just provides the movement, and the heating is done separately, e.g. they may be controlled by different means, e.g. different controllers. In some embodiments, the controllers and optional sensors are all connected to a CPU for providing accurate heating, feeding rate and/or cooling, for providing an appropriate temperature gradient. In some embodiments, the nozzle 3 is a replaceable nozzle. In some embodiments, the extruder may include a connection to a voltage supply, to provide a voltage between the material in the extruder and the buildplate of a 3D printer.

In general, different configurations can be applied for the extruder. For example, FIG 2, FIG 3 and FIG 4 show the extruder comprising several pieces attached to heaters 4, 7 and separated by an insulation piece providing a thermal break 5. Alternatively, the thermal break 5 can be realized by geometrical design, such a small channel diameter, smaller outer diameter, presence of fins, etc. Thus, the part forming the thermal break may be a shaped portion of the reservoir, as shown in FIG 6. FIG 6 shows a single block of material enclosing the reservoir. In some embodiments, the heaters may be an integral part of the extruder.

Additional heaters can be included depending on the required extrusion speed range and material properties of the extrusion material.

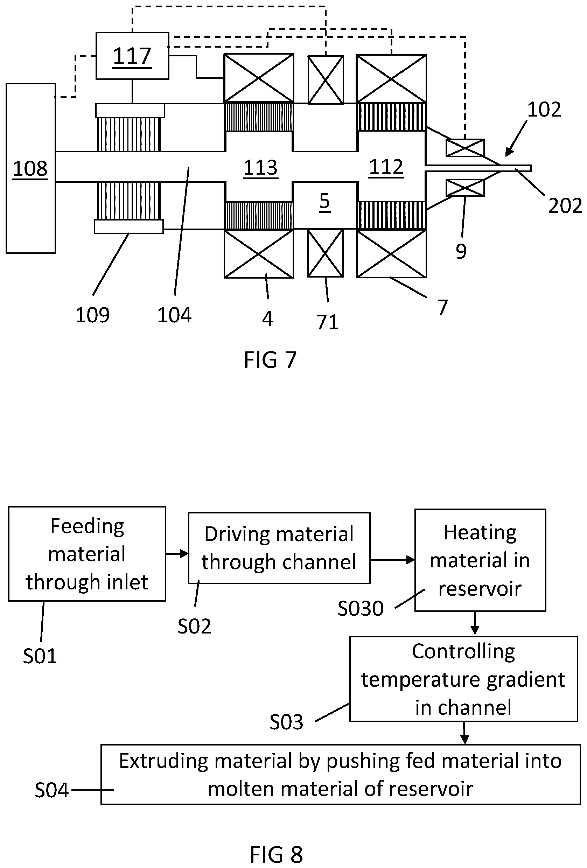

FIG 7 shows an additional heater 71 in the break 5 between the first reservoir part 113 and second reservoir part 112. This allows a higher range of extrusion speeds. At low speeds, additional heating might be required to prevent solidification in that area. At high speeds, additional heating might be required to help the heater 7 closest to the outlet to reach the extrusion temperature. Additionally, the heater of each area may include a plurality of heating units, for example a plurality of heating resistors or a plurality of inductors which may be individually powered and/or controlled.

In a further aspect, the present invention provides a method of extrusion of material, which can be used during 3D printing. The method allows volumetric extrusion of metals or polymers without the need of high-pressure systems, with low or no dripping/oozing, and with fast and high range of deposition rates.

The method is carried out using an extruder with a reservoir, such as the extruder of the first aspect of the present invention. FIG 8 is a chart with steps of the method. The method includes filling the reservoir with molten material, for example by heating S030 melting material in the reservoir using a heater.

In some embodiments of the present invention, the initial filling procedure includes the following steps:
- Knowing the volume available inside the extruder, it is known (approximately) how much it needs to be filled prior to extrusion.
- the heaters, for example the heaters in the first part of the reservoir, are set to a desired temperature, e.g. the process temperature. The rest of heaters might be set to lower temperature than the actual process temperature until the reservoir is filled, in order to maintain enough viscosity and prevent dripping too early.

- filling is started and the filling length is monitored. When extrusion occurs prior to the expected amount, in some embodiments the heater 9 can reduce the heating rate so that the tip is (partially) solidified to prevent the early extrusion.
- feeding is continued until the reservoir is filled. This can be monitored, for example, with a feeding force sensor in the feeding system 108 or slipping of the feeding system if relevant, or with the load cell 400.
- all process temperatures are set and the temperature of the first part 113 of the reservoir (for determining the mushy zone position) is set as such that continuous extrusion is achieved. This mean that when a drop molten material falls, a next drop immediately starts forming again when keep on feeding. As long as this is not the case, the mushy zone is not in the correct position (but somewhere in the reservoir) and the material is pulled out by the formed droplet and gravity. This last calibration is mainly needed when a new system is used for the first time or when experimenting with different extrusion materials.

Material is introduced S01 or fed through a feedstock inlet piece, sending S02 it through a channel into the reservoir. There, the material is heated S030. The channel is narrower than the reservoir, and additionally, a temperature gradient is formed and controlled S03 between the (bottom of the feedstock inlet piece 1 and the reservoir 103, i.e. though the channel, so the mushy zone is kept in the area of the channel preferably at the insulating piece, preferably closer to the reservoir than to the inlet 101. In other words, the gradient allows, in a first instance, to keep molten material at the junction between the channel and the reservoir, preventing upwards flow from reaching the inlet. For example, the temperature gradient may be arranged so at least partially molten material is present within the channel. Introducing further material through the inlet into the channel creates a pressure in the reservoir, pushing the molten material in the reservoir. Because of the formation of the mushy zone or consumable piston, back flow is prevented, and material is forced through an outlet connected to the reservoir, for example through an extrusion nozzle.

The method of the present invention allows volumetric extrusion by the pushing/displacement of the fed material, both for polymer and metal materials, with a stable printing, low or no dripping and oozing. In other words, the method allows extruding S04 material by pushing fed material into molten material of reservoir.

The temperature gradient can be provided by control of heat flow at opposite sides of the channel, e.g. at the feedstock inlet piece and at the reservoir. This can be done by e.g. controlling the heating rate of a heater at the reservoir, and/or controlling cooling rate of a cooler at the region of the inlet, e.g. in a feedstock inlet piece. Control can be provided by control signals, by a feedback loop, etc. provided by an electronic component such as a controller, a processor or the like. The controller may provide signals to change the heat flow, e.g. changing the heating power at the reservoir side, or changing the cooling power at the inlet side, and/or by adapting the feedrate.

Introducing S01 material may comprise introducing metal. In some embodiments, it comprises introducing only metallic material or alloys, without being mixed with resin. For example, aluminum or aluminum alloy, silver, gold, magnesium. or copper can be provided. The metal may be provided for example in the form of a metal wire.

Alternatively, the method may comprise providing polymer such as PLA, ABS, PP, PEEK, nylon, PC, e.g. in the form of a wire, or pellets or granulates, the present invention not being limited to these examples.

Despite the differences in material properties and temperature levels, there is not much difference between the extrusion physics between metals and polymers. When wire is fed to the extruder, it is advantageous to ensure that the fed wire provides the extrusion force. This is relatively easy to provide with polymers at low feedrates, due to their high viscosity. The present invention provides extra friction against the motion of molten polymer upwards the channel and allowing a longer length for the wire melting zone (at higher feedrates), thanks to the difference in width between the reservoir and the channel. To avoid heat going up the wire, a cooling area, such as a heat sink, optionally also a heat break could be used. For example, the fed material can be driven S02 through the channel from the inlet, optionally a cooled inlet, through the heat break provided by an insulating piece, into the reservoir.

The present invention allows using metals or polymers with the same architecture (although the design, used material and dimensions may vary depending on the material for extrusion) despite the difference of properties such as high thermal conduction (often 2 or 3 orders of magnitude higher than polymers), together with the required high melting temperatures of metals, which may cause a long weak zone (specially in materials with high conductivity such as metals).

Melting, in case of aluminum e.g. 4043 aluminum alloy, starts at 573°C (solidus temperature)-632°C (liquidus temperature) but contains a lot of energy to melt (latent heat). Melting starts in the mushy zone (at solidus temperature). However, there is a weakening temperature, which in the case of aluminum alloys occurs from 200-250°C to the start of melting, at 573°C. The weakening can, thus, extend to a long wire length. This long weak zone causes wire buckling and huge friction, potentially causing clogging. Additionally, low viscosity of the molten metal (comparable to water) might cause the liquid move up along the wire when pushing on a liquid bath easily. Analogous procedure can be applied to 7075 aluminum alloy, with solidus temperature at 480°C and liquidus at 630°C.

On the other hand, metals can be extruded relatively fast. Polymers, due to their high viscosity and limited maximum heat applicable, are difficult to extrude at a high rate. For high feedrates or speeds, the long weak/melting zone becomes a problem for both polymer and metal extrusion. A large back pressure of the wire on the extruder leads to slipping of the wire in the feeding system (non volumetric extrusion) or buckling.

The particular configuration of the channel and the reservoir and the temperature gradient control allows reducing or preventing a long weakening zone, further providing a sealing effect at the channel or between the channel and the reservoir so no molten material flows up the channel, and the fed material itself creates pressure on the molten material of the reservoir, thereby providing extrusion. Hence, the method allows control of the extrusion process by controlling the feedrate.

The method comprises providing feeding material into the inlet and channel, where the material is chosen so that a gap can be formed between the solid material and the channel. For example, the width of diameter of a feeding wire can be chosen accordingly with the channel width. For example, in case of aluminium, for a wire diameter of e.g. 1.2 mm a channel diameter of 1.25 mm-1.5 mm has been proven to work. However, these values are only an example, and other values can be applied depending on the used material properties, gap size and temperature gradient.

The method allows turning the fed material into a consumable piston, so the fed material pushes on the molten material while transitioning from solid state to molten state, thanks to the buffer reservoir. The temperature at the inlet may be kept the same, for example thanks to a cooler. The temperature at the reservoir may also be constant thanks to the heater. At higher feedrates, and/or if the volume of the reservoir is relatively small, the local temperature of material in the reservoir at the connection with the channel may be lower than on the rest of the reservoir. This can be taken into account and the temperature setpoint may be increased.

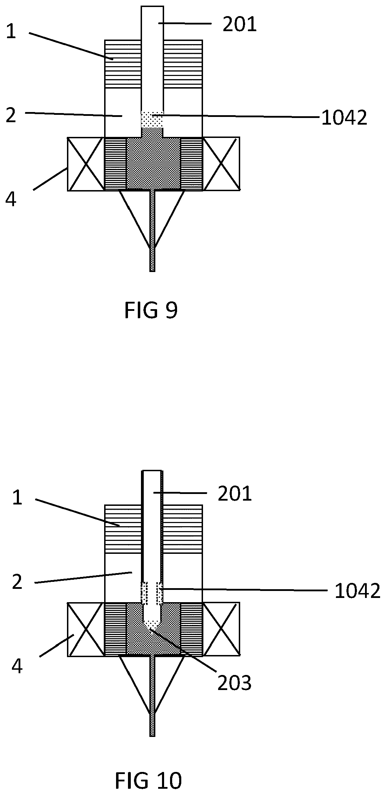

For low wire feedrates, the influence of thermal conduction is high, and heat can travel upwards towards the inlet from the reservoir. This is an important issue in wire fed material, especially on metals. The gradient along the fed material is controlled so that the mushy zone, where the solid material becomes molten, takes place along the channel, preferably close to the reservoir, e.g. along the insulating piece 2. This is shown in FIG 9.

For high wire feedrates, heat does not have time to flow upwards through the fed material towards the inlet. The unmolten or partially molten material can travel inside the buffer reservoir. For example, the mushy zone of the wire will be somewhere in the reservoir. This is shown in FIG 10. As the buffer reservoir is wider than the feeding channel, less friction is generated compared to the case where there is no reservoir, due to the liquid film between the feedstock and reservoir wall and clogging is reduced or avoided. When the material (e.g. wire) enters the buffer reservoir, it will push some liquid upwards in the feeding channel as this is most likely the path of least resistance compared to the nozzle opening. However, due to the temperature gradient, the molten material partially solidifies, creating a mushy zone at the top of the reservoir along the channel, but limited to a small length or portion 1042 of the channel 104, so the piston effect of the material is restored. A careful engineering of the gap between the material and the channel also improves the piston effect.

At low feedrates, the control of the temperature gradient is important to ensure control of the melting process (e.g. the position of the mushy zone) and, in case of wire-fed material, a short length of the weakening zone to reduce chances of friction, buckling and clogging. At high feedrates the buffer allows longer melting lengths without introducing extra friction or controlling different position of the mushy/piston zone, as long as the gradient allows sealing of the reservoir by at least partially molten material. In summary, a feedrate is high or low depending on its conductivity and it determines whether melting takes place in the reservoir or along the channel. The present invention allows controlling and sustaining the presence of a mushy zone along the channel, either way.

When material is not actively fed into the extruder, the remaining material in the channel still behaves as a piston, not allowing the entry of air into the reservoir so dripping of molten material through the outlet is reduced or avoided.

Optionally, a second heating, which may be different from the first, can be applied to the material in the reservoir leaving to the outlet. This way, heating material for providing the temperature gradient can be performed independently from heating the material for extrusion. For example, the first heater may be controlled independently from the second heater. In case the material to be extruded is a polymer, both heaters may heat the material at the same molten temperature. These temperatures depend on the material; for PLA, typically 185°C to about 205°C; for ABS, typically 200°C to 250°C; for PEEK: 340°C-575°C. In case the material is a metal or alloy, the material may be heated at the metal melting temperature in the first reservoir part heated by the first heater close to the channel, while the material may be heated at much higher temperatures, suitable for stable continuous extrusion and fusion with previous layers, in the second reservoir part close to the outlet. Additionally, extruded material can be further heated during extrusion, for example by means of an extra heater at the outlet, e.g. at the extrusion nozzle. Because the amount of material is small along the nozzle, the heating and cooling can be very fast, facilitating for example fast solidification at the end of a deposition cycle or allowing fast melting at the start of a cycle.

Controlling the heater for controlling the temperature gradient, controlling the heater or heaters for providing optimal extrusion temperature, controlling of the cooler for controlling the temperature gradient and/or control of the feedrate (e.g. by means of a feeder mechanism) can be done by means of one or more controllers. Preferably, control of the heating and/or cooling for providing the temperature gradient is done independently of the control of the feedrate. In some embodiments, the feedrate can be used as input data to optimize temperature gradient control. The control can be improved further in case of wire-fed materials by measuring the force on the solid wire while feeding it to the extruded.

The method may comprise applying a light overpressure of an inert gas to reduce oxidation, which is especially advantageous in case of metal printing. This overpressure may not be as high enough so as to produce extrusion, so the gas system may be small and not requiring a large power.

The method can be used for both polymers and metals, taking into account issues such as heat conductivity (which is usually 2 to 3 orders of magnitudes higher in metals than the usual polymers), different melting temperatures and chemical interactions.

In polymer printing, it is sufficient to control only the temperature of extrusion due to low melting temperatures and heat conductivity. For metals, at least two temperatures can be advantageously controlled to prevent clogging: solid to liquid transition and extrusion temperature. As explained above, two heaters for heating different regions of the reservoir, optionally including a heater at the outlet (e.g. nozzle tip heater 9), can advantageously be used for metal extrusion. The number of heaters may be higher, for example each part of the reservoir may be heated by more than one heater, so more control bandwidth can be provided, advantageously increasing the range of available feedrates.

The method can be used with feedstock material in form of granulates or pellets. In some embodiments, introducing material includes driving granulates of polymer or metal into the extruder. An extrusion screw or pump for non-molten particles feeds the granulates to the entrance of the reservoir. The driving force compacts the granulates, but no plastic deformation is necessary, and air pockets may be present between the granulates. Compared to injection molding screws, the screw/feeding mechanism can be completely in the cold zone, advantageously fulfilling (thermo)mechanical requirements of the design and material choice.

At low feedrates the granulates start to weaken and transition to molten state along the channel 104 where the mushy zone is formed.

At high feedrates, the granulates do not have time to melt prior to enter the reservoir. Both in the case of the wire and this case, the displaced volume pushes the molten material through the nozzle. An amount of material may flow upwards the channel. This amount is limited by the narrowing between the reservoir and the channel, and by the temperature gradient through the channel 104 where material is (at least partially) solidified and forming a mushy zone that acts as a piston.

FIG 9 and FIG 10 shows the difference in operation between low feedrates and high feedrates. It is noted that the conductivity is an important factor, as well as the speed of the insertion of material, which determines the behaviour of the material. The solid feedstock is in these examples wire, but the same may apply to other forms of material.

FIG 9 shows the behaviour at low feedrates, with the mushy zone in the portion 1042 of the insulating piece 2 closer to the reservoir (e.g. the half of the piece closer to the reservoir, or even closer). The material 201 acts as a consumable piston, the process of melting starts before the reservoir and the mushy material deforms and takes the shape of the channel, avoiding uncontrolled upflow reaching the inlet. The temperature gradient is kept high in this portion 1042 by control of heating, and/or of cooling, and rates thereof.

FIG 10 shows the behaviour at high feedrates, with the mushy zone 203 of the wire 201 within the reservoir, where the material melts. The fed material pushes on the molten material within the reservoir and pushes it towards the outlet. There is also an upwards movement of molten material from the reservoir towards the inlet. The material starts transitioning from molten to solid state due to cooling, and it fills the space between the wire (although the same applies if a different form is used, such as powder) and the inner walls of the channel. However, this movement and its extent is controlled by controlling the temperature gradient, so the flow stays in the portion 1042 of the channel 104 along the insulating piece 2. As before, the temperature gradient is kept high in this portion 1042 by control of heating (with the heater 4), optionally or additionally cooling (with cooler at the feedstock inlet piece 1), and rates thereof.

The process is continuous, and it can continuously stabilize itself, by controlling the temperature gradient, optionally also the extrusion temperature and feedrate.

The present method and device allow volumetric extrusion in a wide variety of feedrates. It also makes possible metal extrusion in fully liquid state, while preventing oozing or dripping, and not limited to wire feedstock. It is not limited to metals, as it can be used to extrude materials with a wide variety of viscosities, including polymers, even foodstuffs.

## Claims

1. An extruder (100) for 3D printing, comprising an outlet (102) for providing extruded material (202), and a feedstock inlet piece (1) for receiving material into the extruder,
- the feedstock inlet piece (1) including cooling means for cooling said material,
- a reservoir (103) for melting material, and having a reservoir width, being connected to the outlet (102),
- a channel (104) with a channel width, for connecting the feedstock inlet piece (1) with the reservoir (103) and introducing the material into the reservoir, where the channel width is lower than the reservoir width,
the extruder (100) further comprising
- a first heater (4) for melting material in in a first reservoir part (113) of the reservoir (103) close to the channel, and
- a second heater (7) close to the connection of the reservoir to the outlet (102), for maintaining molten material in a second reservoir part (112) of the reservoir close to the outlet at the same temperature as the material in the first reservoir part (113) or at higher temperature, and
- a controller (107, 117) for controlling the temperature gradient of the material through the channel (104), the controller configured to maintain the level of molten material at least at the junction between the reservoir (103) and the channel (104) or along the channel (104) during extrusion, for providing extrusion by the material introduced through the feedstock inlet piece and pushing on the molten material in the reservoir (103),
**characterized in that** the first heater is distanced from the second heater (7) by a thermal break (5) separating the reservoir in a first reservoir part (113) close to the channel (104) and a second reservoir part (112) close to the outlet (102).

2. The extruder of the previous claim, wherein the controller (107, 117) is configured to control the heater, and/or wherein the cooling means including an active cooler (109), wherein the controller (117) is configured to control the active cooler (109) to control the cooling rate of the material.

3. The extruder of any one of the previous claims further comprising a material feeder (108, 500) for feeding material into the feedstock inlet piece (1), wherein the controller (117) is further configured to control the material feeder (108, 500) to control the feedrate.

4. The extruder of claim 3 wherein the material feeder (108) is a wire feeder (108) for feeding wire (201) and further comprising a load cell (400) between the wire feeder (108) and feedstock inlet piece (1) to measure the extrusion force on the wire (201).

5. The extruder of any one of the previous claims wherein the thermal break (5) provides a further channel (106) being adapted to thermally insulate the first part (112) from the second part (113) of the reservoir.

6. The extruder of any one of the previous claims wherein the outlet (102) comprises a further heater (9) for controlling the temperature of the extruded material (202) at the outlet.

7. The extruder of any one of the previous claims further comprising an insulating piece (2) comprising at least a portion of the channel (104) to thermally insulate the feedstock inlet piece (1) from the reservoir (103).

8. The extruder of any one of the previous claims further comprising electrodes configured to apply a voltage between the extruder and a buildplate of a 3D printer.

9. A method for extruding material comprising
- introducing (S01) material in an extruder according to any one of the preceding claims through a feedstock inlet piece,
- heating (S030) material in a reservoir for obtaining a level of molten material, while preventing the heating of the material through the feedstock inlet piece,
- feeding (S02) material into the reservoir through a channel, the channel having a channel width and the reservoir having a reservoir width, where the channel width is lower than the reservoir width,
- controlling (S03) the temperature gradient along the channel for maintaining the level of molten material at the junction between the reservoir and the channel or along the channel during extrusion,
so that introducing further solid material into the reservoir pushes the molten material in the reservoir through an outlet connected to the reservoir, thus forming (S04) extruded material.

10. The method of the previous claim further comprising controlling the feedrate of material and/or wherein cooling the material comprises controlling the cooling rate.

11. The method of any one of claims 9 or 10 for extruding aluminum, an aluminum alloy or copper.

## Patentansprüche

1. -Ein Extruder (100) für den 3D-Druck, umfassend einen Auslass (102) zur Bereitstellung von stranggepresstem Material (202) und ein Einlassstück für das Ausgangsmaterial (1) zur Aufnahme von Material in den Extruder,
- wobei das Einlassstück für das Ausgangsmaterial (1) Kühlmittel zum Kühlen des Materials beinhaltet,
- ein Reservoir (103) zum Schmelzen von Material, das eine Reservoirbreite aufweist und mit dem Auslass (102) verbunden ist,
- einen Kanal (104) mit einer Kanalbreite, um das Einlassstück für das Ausgangsmaterial (1) mit dem Reservoir (103) zu verbinden und das Material in das Reservoir einzuführen, wobei die Kanalbreite geringer ist als die Reservoirbreite,
wobei der Extruder (100) weiter Folgendes umfasst
- eine erste Heizung (4) zum Schmelzen von Material in einem ersten Reservoirteil (113) des Reservoirs (103) in der Nähe des Kanals, und
- eine zweite Heizung (7) in der Nähe der Verbindung des Reservoirs mit dem Auslass (102), um geschmolzenes Material in einem zweiten Reservoirteil (112) des Reservoirs in der Nähe des Auslasses auf der gleichen Temperatur wie das Material im ersten Reservoirteil (113) oder auf einer höheren Temperatur zu halten, und
- eine Steuereinheit (107, 117) zum Steuern des Temperaturgradienten des Materials durch den Kanal (104), wobei die Steuereinheit so konfiguriert ist, dass sie den Pegel des geschmolzenen Materials zumindest an der Verbindungstelle zwischen dem Reservoir (103) und dem Kanal (104) oder entlang des Kanals (104) während der Extrusion aufrechterhält, um eine Extrusion durch das durch das Einlassstück für das Ausgangsmaterial eingeführte Material zu ermöglichen und auf das geschmolzene Material im Reservoir (103) zu drücken,
**dadurch gekennzeichnet, dass** die erste Heizung von der zweiten Heizung (7) durch eine thermische Trennung (5) beabstandet ist, die das Reservoir in einen ersten Reservoirteil (113) in der Nähe des Kanals (104) und einen zweiten Reservoirteil (112) in der Nähe des Auslasses (102) trennt.

2. -Der Extruder nach dem vorstehenden Anspruch, wobei die Steuereinheit (107, 117) so konfiguriert ist, dass sie die Heizung steuert, und/oder wobei das Kühlmittel einen aktiven Kühler (109) beinhaltet, wobei die Steuereinheit (117) so konfiguriert ist, dass sie den aktiven Kühler (109) steuert, um die Kühlrate des Materials zu steuern.

3. -Der Extruder nach einem der vorstehenden Ansprüche, weiter umfassend eine Materialzuführung (108, 500) zum Zuführen von Material in das Einlassstück für das Ausgangsmaterial (1), wobei die Steuereinheit (117) weiter so konfiguriert ist, dass sie die Materialzuführung (108, 500) steuert, um die Zuführungsrate zu steuern.

4. -Der Extruder nach Anspruch 3, wobei die Materialzuführung (108) eine Drahtzuführung (108) zum Zuführen von Draht (201) ist und weiter eine Wägezelle (400) zwischen der Drahtzuführung (108) und dem Einlassstück für das Ausgangsmaterial (1) umfasst, um die Extrusionskraft auf den Draht (201) zu messen.

5. -Der Extruder nach einem der vorstehenden Ansprüche, wobei die thermische Trennung (5) einen weiteren Kanal (106) bereitstellt, der dazu ausgelegt ist, den ersten Teil (112) von dem zweiten Teil (113) des Reservoirs thermisch zu isolieren.

6. -Der Extruder nach einem der vorstehenden Ansprüche, wobei der Auslass (102) eine weitere Heizung (9) zur Steuerung der Temperatur des extrudierten Materials (202) am Auslass umfasst.

7. -Der Extruder nach einem der vorstehenden Ansprüche, weiter umfassend ein Isolierstück (2), das mindestens einen Abschnitt des Kanals (104) umfasst, um das Einlassstück für das Ausgangsmaterial (1) vom Reservoir (103) thermisch zu isolieren.

8. -Der Extruder nach einem der vorstehenden Ansprüche, weiter umfassend Elektroden, die so konfiguriert sind, dass sie eine Spannung zwischen dem Extruder und einer Bauplatte eines 3D-Druckers anlegen.

9. -Ein Verfahren zum Strangpressen von Material, umfassend
- Einführen (S01) von Material in einen Extruder nach einem der vorstehenden Ansprüche durch ein Einlassstück für das Ausgangsmaterial,
- Erhitzen (S030) von Material in einem Reservoir zum Erhalten eines Pegels von geschmolzenem Material, während das Erhitzen des Materials durch das Einlassstück für das Ausgangsmaterial verhindert wird,
- Zuführen (S02) von Material in das Reservoir durch einen Kanal, wobei der Kanal eine Kanalbreite und das Reservoir eine Reservoirbreite aufweist, wobei die Kanalbreite geringer ist als die Reservoirbreite,
- Steuerung (S03) des Temperaturgradienten entlang des Kanals zur Aufrechterhaltung des Pegels des geschmolzenen Materials an der Verbindungsstelle zwischen dem Reservoir und dem Kanal oder entlang des Kanals während der Extrusion,
sodass das Einführen von weiterem festem Material in das Reservoir das geschmolzene Material im Reservoir durch einen mit dem Reservoir verbundenen Auslass drückt, wodurch stranggepresstes Material entsteht (S04).

10. -Das Verfahren nach dem vorstehenden Anspruch, weiter umfassend die Steuerung der Materialzufuhr und/oder wobei die Kühlung des Materials die Steuerung der Kühlrate umfasst.

11. -Das Verfahren nach einem der Ansprüche 9 oder 10 zum Strangpressen von Aluminium, einer Aluminiumlegierung oder Kupfer.

## Revendications

1. Un extrudeur (100) pour l'impression 3D, comprenant une sortie (102) pour fournir du matériau extrudé (202), et une pièce d'entrée de matière première (1) pour recevoir du matériau dans l'extrudeur,
• ladite pièce d'entrée de matière première (1) comprenant des moyens de refroidissement pour refroidir ledit matériau,
• un réservoir (103) pour faire fondre le matériau, ayant une largeur de réservoir, étant connecté à la sortie (102),
• un canal (104) ayant une largeur de canal, pour connecter la pièce d'entrée de matière première (1) avec le réservoir (103) et introduire le matériau dans le réservoir, dans lequel la largeur du canal est inférieure à la largeur du réservoir, ledit extrudeur (100) comprenant en outre
• un premier réchauffeur (4) pour faire fondre le matériau dans une première partie de réservoir (113) du réservoir (103) proche du canal, et
• un second réchauffeur (7) proche de la connexion du réservoir à la sortie (102), pour maintenir le matériau fondu dans une seconde partie de réservoir (112) du réservoir proche de la sortie à la même température que le matériau dans la première partie de réservoir (113) ou à une température plus élevée, et
• un contrôleur (107, 117) pour contrôler le gradient de température du matériau à travers le canal (104), le contrôleur étant configuré pour maintenir le niveau de matériau fondu au moins à la jonction entre le réservoir (103) et le canal (104) ou le long du canal (104) pendant l'extrusion, pour fournir une extrusion par le matériau introduit à travers la pièce d'entrée de matière première et poussant sur le matériau fondu dans le réservoir (103),
**caractérisé en ce que** le premier réchauffeur est éloigné du second réchauffeur (7) par une coupure thermique (5) séparant le réservoir en une première partie de réservoir (113) proche du canal (104) et une seconde partie de réservoir (112) proche de la sortie (102) .

2. L'extrudeur de la revendication précédente, dans lequel le contrôleur (107, 117) est configuré pour contrôler le réchauffeur, et/ou dans lequel les moyens de refroidissement comprennent un refroidisseur actif (109), dans lequel le contrôleur (117) est configuré pour contrôler le refroidisseur actif (109) pour contrôler le taux de refroidissement du matériau.

3. L'extrudeur de l'une quelconque des revendications précédentes comprenant en outre un alimentateur de matériau (108, 500) pour introduire du matériau dans la pièce d'entrée de matière première (1), dans lequel le contrôleur (117) est également configuré pour contrôler l'alimentateur de matériau (108, 500) pour contrôler la vitesse d'alimentation.

4. L'extrudeur de la revendication 3, dans lequel l'alimentateur de matériau (108) est un alimentateur de fil (108) pour introduire un fil (201) et comprenant en outre une cellule de charge (400) entre l'alimentateur de fil (108) et la pièce d'entrée de matière première (1) pour mesurer la force d'extrusion sur le fil (201).

5. L'extrudeur de l'une quelconque des revendications précédentes, dans lequel la coupure thermique (5) fournit un autre canal (106) étant adapté pour isoler thermiquement la première partie (112) de la seconde partie (113) du réservoir.

6. L'extrudeur de l'une quelconque des revendications précédentes, dans lequel la sortie (102) comprend un autre réchauffeur (9) pour contrôler la température du matériau extrudé (202) à la sortie.

7. L'extrudeur de l'une quelconque des revendications précédentes comprenant en outre une pièce isolante (2) comprenant au moins une partie du canal (104) pour isoler thermiquement la pièce d'entrée de matière première (1) du réservoir (103).

8. L'extrudeur de l'une quelconque des revendications précédentes comprenant en outre des électrodes configurées pour appliquer une tension entre l'extrudeur et une plaque de construction d'une imprimante 3D.

9. Une méthode d'extrusion de matériau comprenant
• l'introduction (S01) de matériau dans un extrudeur selon l'une quelconque des revendications précédentes à travers une pièce d'entrée de matière première,
• le chauffage (S030) du matériau dans un réservoir pour obtenir un niveau de matériau fondu, tout en prévenant le chauffage du matériau à travers la pièce d'entrée de matière première,
• l'introduction (S02) de matériau dans le réservoir à travers un canal, le canal ayant une largeur de canal et le réservoir ayant une largeur de réservoir, dans lequel la largeur du canal est inférieure à la largeur du réservoir,
• le contrôle (S03) du gradient de température le long du canal pour maintenir le niveau de matériau fondu à la jonction entre le réservoir et le canal ou le long du canal pendant l'extrusion,
de manière à ce que l'introduction de davantage de matériau solide dans le réservoir pousse le matériau fondu dans le réservoir à travers une sortie connectée au réservoir, formant ainsi (S04) du matériau extrudé.

10. La méthode de la revendication précédente comprenant en outre le contrôle de la vitesse d'alimentation du matériau et/ou dans laquelle le refroidissement du matériau comprend le contrôle du taux de refroidissement.

11. La méthode de l'une quelconque des revendications 9 ou 10 pour extruder de l'aluminium, un alliage d'aluminium ou du cuivre.
